# EUROPÄISCHE PATENTSCHRIFT

(11) **EP 0 941 009 B1**
(45) Veröffentlichungstag und Bekanntmachung des Hinweises auf die Patenterteilung: **26.12.2007**
(21) Anmeldenummer: 99103895.1
(22) Anmeldetag: 01.03.1999
(51) Int. Cl.: H04Q 11/04

(54) **Übertragung von Namensinformationen über das öffentliche Euro-ISDN-Netz**
Transmission of name information via the public Euro-ISDN network
Transmission d'information de noms via le réseau Euro-RNIS

(30) Priorität: 03.03.1998 DE 19808941
(43) Veröffentlichungstag der Anmeldung: 08.09.1999
(73) Patentinhaber: SIEMENS AKTIENGESELLSCHAFT, 80333 München (DE)
(72) Erfinder: Brüggemeier, Wolfgang, 33129 Delbrück (DE); Kloke, Michael, 34431 Marsberg (DE); Schindel, Frank, 33104 Paderborn (DE)

(56) Entgegenhaltungen:
- EP-A- 0 825 751
- PATENT ABSTRACTS OF JAPAN Bd. 017, Nr. 444 (E-1415), 16. August 1993 (1993-08-16) & JP 05 095437 A (NEC COMMUN SYST LTD), 16. April 1993 (1993-04-16)
- ETSI STANDARD ETS 300 237: "Private Telecommunication Network (PTN); Specification, functional models and information flows Name identification supplementary services" Juni 1993 (1993-06), EUROPEAN TELECOMMUNICATIONS STANDARDS INSTITUTE , XP014012452
- ETSI STANDARD ETS 300 061-1: "Integrated Services Digital Network (ISDN); Subaddressing (SUB) supplementary service; Digital Subscriber Signalling System No. one (DSS1) protocol; Part 1: Protocol specification;" Oktober 1991 (1991-10), EUROPEAN TELECOMMUNICATIONS STANDARDS INSTITUTE , XP014011893

## Beschreibung

Die vorliegende Erfindung bezieht sich auf die Übertragung von Namensinformationen über das öffentliche Euro-ISDN-Netz (DSS1-Protokoll).

Das Euro-ISDN-Protokoll ist eine europaweite Vereinheitlichung nationaler ISDN-Ausprägungen in einem Standard. Der Hauptunterschied zum "deutschen" ISDN ist der, daß in Deutschland bisher 1TR6 als Signalisierungsprotokoll eingesetzt wurde. Bei Euro-ISDN wird dagegen das sogenannte DSS1-Protokoll für die Signalisierung zwischen Teilnehmer und Vermittlungsstelle verwendet. Das DSS-1 (Digital Subscriber Signalling System No. 1) ist dabei ein auf ITUI.411 basierendes Signalisierungsprotokoll für den D-Kanal des Euro-ISDN.

Der D-Kanal ist dabei allgemein der Signalisierungskanal im ISDN-Protokoll. Im D-Kanal werden digitale Informationsströme in einem rahmenorientierten HDLC-Protokoll übertragen. Über den D-Kanal erfolgt paketorientiert der Verbindungsaufbau, der Verbindungsabbau und die Kommunikationssteuerung. Der D-Kanal ist somit Voraussetzung für Diensteintegration und Mischkommunikationen im ISDN. Über den D-Kanal kann außerdem eine paketvermittelte Datenübertragung vorgenommen werden, was bei einigen Kommunikationsprodukten auch für Anwenderkommunikation ausgenutzt wird. Über den D-Kanal werden dabei sogenannte Nachrichten (Messages) ausgetauscht.

Bei der vorliegenden Erfindung werden insbesondere die Möglichkeiten des D-Kanals in einer neuen Weise genutzt.

Im Euro-ISDN-Protokoll DSS1 sind dabei die Leistungsmerkmale CNIP (Called Name Identification Presentation), CNIR und CONP (Connected Name Identification Presentation), d. h. der Transport von Teilnehmernamen über das öffentliche Netz, nicht möglich.

Die Übertragung von Namensinformationen des Kommunikationspartners (als zusätzliche Information zur Rufnummer) ist indessen bei heutigen PBX ("private branch exchange", Nebenstellenanlagen)-Applikationen zentraler Bestandteil der Signalisierung. Da im öffentlichen Euro-ISDN(DSS1)-Protokoll die Möglichkeit der Namenssignalisierung nicht besteht, können also Namensinformationen bei einer Zusammenarbeit einer PBX mit dem öffentlichen DSS1-Netz nicht unterstützt werden.

Gemäß dem Stand der Technik kann der Name nur übertragen bzw. angezeigt werden, wenn der Anruf von einem Teilnehmer innerhalb derselben privaten Telefonanlage (also nicht über das öffentliche Netz) kommt. Bei Anrufen über das öffentliche ISDN-Netz kann lediglich die Rufnummer des Anrufers übertragen werden.

Der ETSI-Standard ETS 300 238 (Juni 1993) offenbart ein Verfahren zum Übertragen von Namensinformationen über ein privates Telekommunikationsnetz, erwähnt im Abschnitt 7.5 das Übertragen von Namensinformationen über öffentliche ISDN-Netze, jedoch detailliert dies weiter nicht.

Es ist daher Aufgabe der vorliegenden Erfindung, eine Möglichkeit zur Übertragung von Namensinformationen über das öffentliche Euro-ISDN-DSS1-Netz zu schaffen.

Gemäß der Erfindung wird die Aufgabe durch die unabhängigen Ansprüche gelöst, die abhängigen Ansprüche bilden den zentralen Gedanken der Erfindung in besonders vorteilhafter Weise weiter.

Erfindungsgemäß ist also ein Verfahren zur Übertragung von Information bezüglich der Namen von Teilnehmern vorgesehen, die einem sendenden System bzw. einem empfangenden System zugeordnet sind. Die Übertragung von dem sendenden System zu dem empfangenden System erfolgt dabei über ein öffentliches Netz gemäß dem Euro-ISDN(DSS1)-Protokoll.

Gemäß der Erfindung wird die Information bezüglich der Namen von Teilnehmern der Übertragung in einem Informationselement SUBADDRESS einer Nachricht des Euro-ISDN-Protokolls übertragen, wobei in das Informationselement SUBADDRESS weiterhin eine Kennung eingefügt wird, die anzeigt, daß in diesem Informationselement eine Teilnehmernamen-Information übertragen wird. die Kennung unterscheidet somit die Namensinformation von einer echten Subaddressierung, für die das Informationselement SUBADDRESS eigentlich vorgesehen ist.

Die Einfügung der Information bezüglich der Namen von Teilnehmern der Übertragung in das Informationselement SUBADDRESS des Euro-ISDN-Protokolls kann vorzugsweise nur erfolgen, wenn eine Sprachübertragung ausgeführt wird. Bei Datenübertragungen ist nämlich gegebenenfalls das Informationselement SUBADDRESS bereits anders, d.h. im sinne einer tatsächlichen Subaddressierung, belegt und steht daher nicht mehr zur Namensinformationsübertragung zur Verfügung.

Als Informationselement für die Übertragung der Teilnehmernamen-Information kann insbesondere die CALLING PARTY SUBADDRESS der ISDN-Nachricht SETUP im Fall des sendenden Systems bzw. die CONNECTED PARTY SUBADDRESS der ISDN-Nachricht CONNECT im Fall des empfangenden Systems verwendet werden.

Vor der Übertragung der Teilnehmernamen-Information kann anhand einer Tabelle geprüft werden, ob dem entsprechenden Teilnehmer, der an dem sendenden bzw. dem empfangenden System vorliegt, ein Name zugeordnet ist.

Für den Fall, daß dem Teilnehmer ein Name zugeordnet ist, kann anhand der Tabelle weiterhin geprüft werden, ob die Übertragung der Teilnehmernamen-Information gesperrt oder freigegeben ist.

Weiterhin kann vor der Übertragung der Teilnehmernamen-Information geprüft werden, ob das entsprechende Informationselement SUBADDRESS frei oder schon belegt ist, um zu verhindern, daß die Übertragung der Teilnehmernamen-Information in dem Informationselement SUBADDRESS mit einer eigentlichen Subadressierung oder ähnlichem kollidiert.

Für den Fall, daß die Teilnehmernamen-Information eine vorbestimmte Länge überschreitet, kann die Teilnehmernamen-Information entsprechend gekürzt werden und weiterhin eine Abkürzungs-Information in das Informationselement SUBADDRESS eingefügt und übertragen werden, wobei die Abkürzungs-Information anzeigt, daß die übertragene Teilnehmernamen-Information gekürzt wurde.

Gemäß der Erfindung ist weiterhin eine Telefonanlage nach dem Euro-ISDN(DSS1)-Protokoll vorgesehen. Diese Telefonanlage weist ein sendendes System und ein empfangendes System auf, die über ein öffentliches Netz miteinander verbunden sind, wobei dem sendenden System und dem empfangenden System jeweils Namen von Teilnehmern zugeordnet werden können.

Gemäß der Erfindung ist dabei das sendende System und das empfangende System so ausgelegt, daß die Information bezüglich der Namen von Teilnehmern der Übertragung in einem Informationselement SUBADDRESS einer Nachricht des Euro-ISDN-Protokolls übertragbar ist, wobei in das Informationselement SUBADDRESS weiterhin eine Kennung eingefügt ist, die anzeigt, daß in diesem Informationselement SUBADDRESS eine Teilnehmernamen-Information übertragen wird.

Die Einfügung der Information bezüglich der Namen von Teilnehmern der Übertragung in dem Informationselement SUBADDRESS des Euro-ISDN-Protokolls erfolgt dabei nur, wenn das sendende System bzw. das empfangende System feststellt, daß eine Sprachübertragung gemäß dem Euro-ISDN-Protokoll ausgeführt werden soll.

Das Informationselement für die Übertragung der Teilnehmernamen-Information kann die CALLING PARTY SUBADDRESS der ISDN-Nachricht SETUP im Fall des sendenden Systems und die CONNECTED PARTY SUBADDRESS der ISDN-Nachricht CONNECT im Fall des empfangenden Systems sein.

In dem sendenden System bzw. dem empfangenden System kann jeweils eine Tabelle vorgesehen sein, anhand der vor der Übertragung der Teilnehmernamen-Information geprüft wird, ob dem entsprechenden Teilnehmer ein Name zugeordnet ist.

Für den Fall, daß einem Teilnehmer ein Name zugeordnet ist, kann weiterhin anhand der Tabelle geprüft werden, ob die Übertragung der Teilnehmernamen-Information freigegeben oder gesperrt ist.

Vor der Übertragung der Teilnehmernamen-Information kann das sendende System bzw. das empfangende System prüfen, ob das entsprechende Informationselement SUBADDRESS frei oder schon belegt ist.

Für den Fall, daß die Teilnehmernamen-Information eine vorbestimmte Länge überschreitet, kann die Teilnehmernamen-Information entsprechend gekürzt werden und weiterhin eine Abkürzungsinformation in das Informationselement SUBADDRESS eingefügt und übertragen werden, wobei die Abkürzungsinformation anzeigt, daß die übertragene Teilnehmer-Nameninformation gekürzt wurde.

Die Erfindung wird nun anhand eines Ausführungsbeispiels und bezugnehmend auf die begleitenden Zeichnungen näher beschrieben.

Es zeigen:
- Figur 1: eine schematische Darstellung der Übertragung von Namensinformation zwischen zwei PBX (Nebenstellenanlagen)-Systemen über das öffentliche Netz gemäß dem Euro-ISDN(DSS1)-Protokoll,
- Figur 2: ein internes Format der Übertragung der Namensinformation in einem PBX-System,
- Figur 3: eine Subadresse einer Nachricht (Message) gemäß dem DSS1-Protokoll, und
- Figur 4: eine schematische Darstellung eines bekannten ISDN-Übertragungssystems.

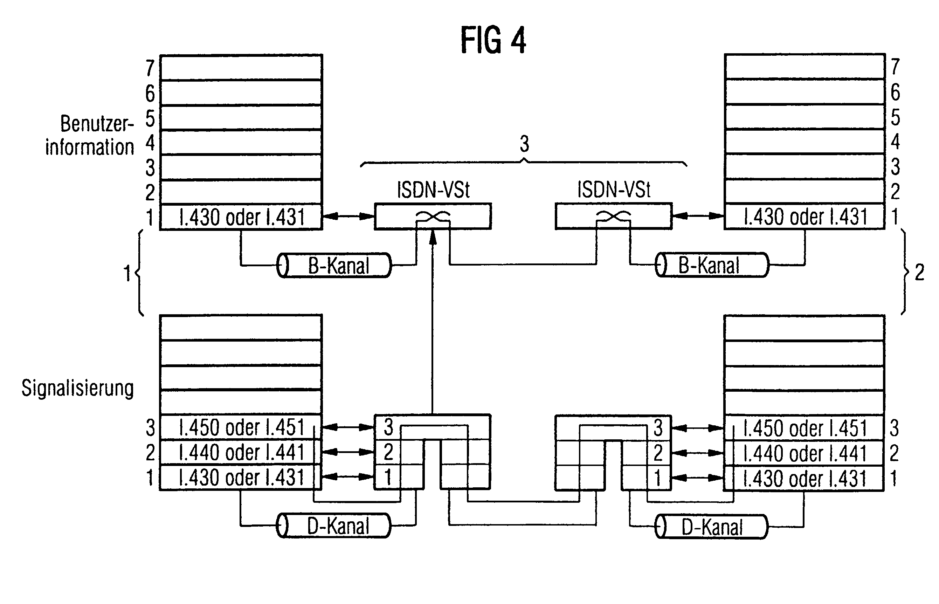

Zuerst soll bezugnehmend auf Fig. 4 allgemein ein ISDN-System beschrieben werden. Mit Bezugszeichen 1 ist dabei ein sendendes System bezeichnet. Dieses sendende System 1 kann Benutzerinformationen, wie beispielsweise Sprachen oder Daten, über eine ISDN-Verbindung 3 zu einem empfangenden System 2 über den sogenannten B-Kanal übertragen.

Wie bereits erwähnt, ist weiterhin ein D-Kanal zur Signalisierungskommunikation zwischen dem sendenden System 1 und dem empfangenden System 2 vorgesehen.

Gemäß der vorliegenden Erfindung erfolgt eine Signalisierung der Namensinformation in dem Informationselement SUBADDRESS einer Nachricht (Message) des D-Kanals des DSS1-Protokolls. Dieses Informationselement dient dazu, zusätzliche Adressinformationen transparent - d. h. ohne Auswertung - über das öffentliche DSS1-Netz zwischen den beteiligten Kommunikationspartners (sendendes System 1 bzw. empfangendes System 2) zu signalisieren. Das SUBADDRESS-Element wird gemeinsam mit den Rufnummern in den entsprechenden ISDN-Nachrichten signalisiert.

Bei Sprachverbindungen wird das Informationselement SUBADDRESS in der Regel nicht genutzt. Die Namensinformationen können somit in das Informationselement SUBADDRESS kopiert werden. Das Informazionselement SUBADDRESS kann dabei eine Kennung erhalten, die einerseits nicht gegen die geltende Norm verstößt und andererseits die Übertragung von Namensinformationen von einer echten Subadresse unterscheidbar macht.

Dabei ist zu bedenken, daß zur Zeit die nutzbare Länge des Informationselements SUBADDRESS auf 20 Bytes festgelegt ist.

Durch den Transport des Teilnehmernamens im öffentlichen Netz kann somit auch zwischen zwei PBX (Nebenstellenanlagen)-Systemen unter Verwendung des Informationselementes SUBADDRESS als Träger das Leistungsmerkmal CNIP (Called Name Identification Presentation) bzw. CONP (Connected Name Identification Presentation) realisiert werden. Mit anderen Worten kann ein Teilnehmernamen, der jeweils einem eines sendenden und eines empfangenden Systems zugeordnet ist, zu dem jeweils anderen System übertragen werden und dort beispielsweise in einem Display angezeigt werden.

Innerhalb eines PBX-Systems übernimmt der sogenannte DH(Device-Handler)-ISDN die Aufgabe, bei DSS1-Verbindungen über das öffentliche Netz (Kanal S₀ und S_{2M}) die intern in einem PBX-System verwendeten Namen innerhalb der DSS1-Subadresse zu übertragen. Dies ist indessen nur möglich, wenn bei Sprachverbindungen das Informationselement SUBADDRESS nicht anderweitig verwendet wird. Eine weitere Einschränkung stellt die maximale Länge des Informationselements SUBADDRESS von 20 Byte Nutzinformation dar. Unter Umständen muß daher die maximale Länge des intern im PBX-System verwendeten Namens von 26 Byte gekürzt werden.

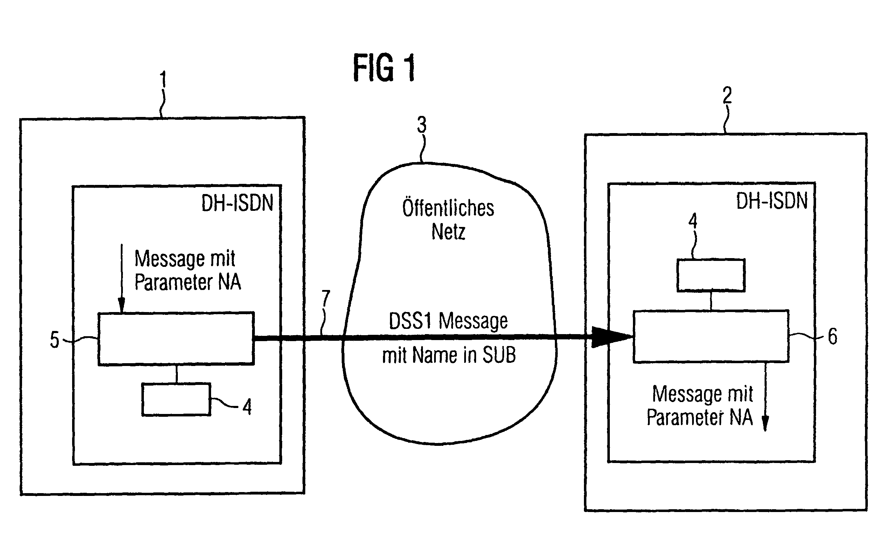

Bezugnehmend auf Fig. 1 soll nunmehr die Übertragung von Namen zwischen zwei PBX-Systemen über ein öffentliches Netz 3 dargestellt werden.

In Fig. 1 ist ein sendendes System 1 sowie ein empfangendes System 2 dargestellt, die miteinander über eine Amtsleitung 7 des öffentlichen Euro-ISDN(DSS1)-Netzes 3 kommunizieren können. Das sendende System 1 weist dabei einen LM-Manager (Leistungsmerkmal-Manager) 5 auf. Das empfangende System 2 weist einen LM-Manager 6 auf.

Bei einer DSS1-Verbindung über das öffentliche Netz 3 liest der LM-Manager 5 des sendenden PBX-Systems 1 aus einer ZST-Nachricht (Zentrale Steuerungs-Nachricht) die Nutzdaten eines FAC-IE (Facility Information Element) der Operation NAME (NA) des sendenden PBX-Systems 1 aus und überträgt diese Nutzdaten in das Informationselement SUBADDRESS (SUB) einer Nachricht (Message) gemäß dem DSS1-Protokoll. In dieser Form kann die Namensinformation des dem sendenden System 1 zugeordneten Teilnehmers über das öffentliche Euro-ISDN-Netz 3 mittels der Amtsleitung 7 transportiert werden. Der LM-Manager 6 des empfangenden PBX-Systems 2 erkennt das Informationselement SUBADDRESS der Nachricht als Träger einer Namensinformation und übernimmt diese Namensinformation wieder in ein FAC-IE (Facility Information Element) mit der Operation NAME.

Externe Schnittstellen sind auf der einen Seite die Schnittstelle zwischen der ZST (Zentralen Steuerung) und dem DH-ISDN (Device-Handler-ISDN) 5 bzw. 6 sowie auf der anderen Seite die ISDN-Amtsleitung 7 mit dem DSS1-Protokoll.

Zwischen der ZST und dem DH-ISDN 5 bzw. 6 können Nachrichten ein FAC-IE mit dem Namen des rufenden Teilnehmers (Calling Party Name) oder dem des antwortenden Teilnehmers (Connected Party Name) von dem empfangenden System 2 aus enthalten werden.

Eine Operation im FAC-IE zur Übertragung von Namen ist im Euro-ISDN(DSS1)-Protokoll nur für den sogenannten Q-Referenzpunkt (Festverbindungen) vorgesehen. Daher können Namen bei DSS1-Amtsleitungen 7 gemäß dem Stand der Technik nicht übermittelt werden. Das Informationselement für die Calling Party Subaddress der Nachricht SETUP bzw. der Connected Party Subaddress der Nachricht CONNECT bieten jedoch einige Freiheiten bezüglich der Kennzeichnung und Codierung der Subadresse, so daß das Informationselement Calling Party Subaddress bzw. Connected Party Subaddress gemäß der vorliegenden Erfindung als Träger des Namens benutzt werden kann. Dies ist möglich, wenn das Informationselement Calling Party Subaddress bzw. Connected Party Subaddress nicht bereits eine echte Subaddress im Sinne einer Subadressierung im Netz enthält.

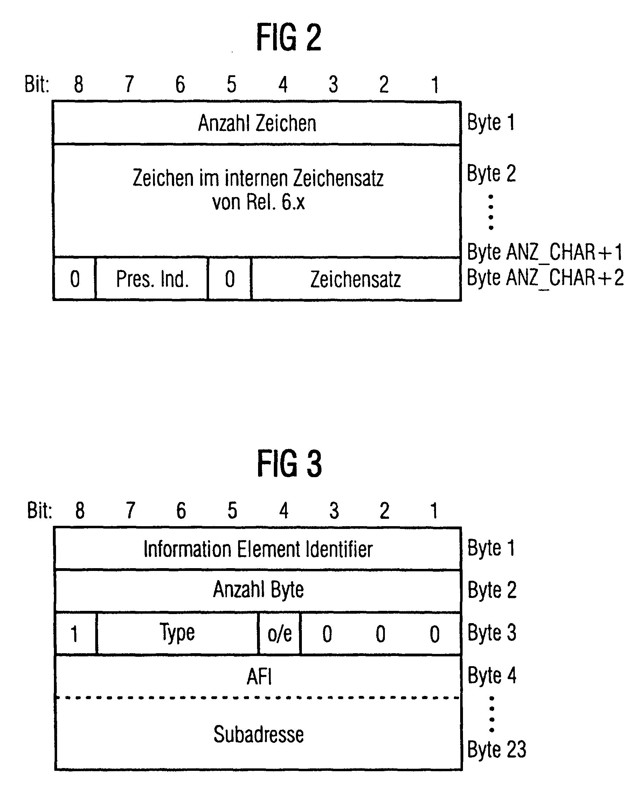

Bezugnehmend auf Fig. 2 soll nunmehr das interne Format der Namensinformation in einem PBX (Nebenstellenanlagen)-System erläutert werden.

Das FAC-IE (Facility Information Element) Calling Party Name bzw. Connected Party Name hat beispielsweise in dem System A6 (als ein Beispiel eines PBX-Systems) eine feste Länge von (ANZ_CHAR+2), wobei ANZ_CHAR eine Konstante von beispielsweise 26 Byte von ZST (Zentrale Steuerung) und PST (Peripheriesteuerung) für die Anzahl intern übertragbarer Zeichen ist. "Anzahl Zeichen" in Fig. 2 gibt daher die Anzahl der vorhandenen Namenszeichen an.

Das Element "Pres.Ind." (Presentation Indicator) gibt an, ob der Name angezeigt werden darf oder nicht bzw. ob er nicht verfügbar ist. Folgende Codierungen werden dabei verwendet:
00 = Presentation allowed (Namensanzeige freigegeben)
01 = Presentation restricted (Namensanzeige unterdrückt)
10 = Name not available (Name nicht verfügbar).

Wie in Fig. 1 gezeigt kann die Zuordnung von Namensinformation eines Teilnehmers zu einem sendenden System 1 bzw. empfangenden System 2 sowie die oben genannten Codierungen in einer Tabelle 4 abgelegt sein, die dem LM-Manager 5 des sendenden Systems 1 bzw. dem LM-Manager 6 des sendenden Systems 2 zugeordnet ist.

Bezugnehmend auf Fig. 3 wird nunmehr der Aufbau eines Informationselements SUBADDRESS gemäß dem DSS1-Protokoll erläutert.

Der Information Element Identifier kennzeichnet den Typ des Informationselements, wobei die beiden hinsichtlich der vorliegenden Erfindung interessierenden Typen wie folgt codiert sind:
01101101 = Calling Party Subaddress (Subadressierung des sendenden Systems 1f)
01001101 = Connected Party Subaddress (Subadressierung des empfangenden System 2).

Der Typ der Subadresse wird als sogenanntes NSAP codiert, hierfür sind die drei Bits von Type mit 000 zu belegen. Der Odd/Even Indikator von Fig. 3 (o/e) wird nur bei BCD-Codierung der Adresse betrachtet. Im Falle von NSAP-Codierung enthält Byte 4 einen AFI (Authority and Format Identifier), welcher den Zeichensatz des Informationselements SUBADDRESS angibt. Der Bereich 00 bis 09 (hex) ist für den internen Gebrauch reserviert und dient im Zuge der vorliegenden Erfindung als Kennung für den Transport des Namens in dem Informationselement SUBADDRESS.

Grundsätzlich werden alle Nachrichten dem LM-Manager 5 bzw. 6 übergeben. Dabei können Nachrichten von der ZST an die DSS1-Amtsleitung 7 Namensinformationen im FAC-IE mit dem OPC (Operation Code) Calling Party Name enthalten. Nachrichten von der DSS1-Amtsleitung 7 an die ZST können nun diese Namensinformationen in dem Informationselement SUBADDRESS der Nachricht SETUP oder CONNECT enthalten, wenn das Informationselement Calling Party Subaddress bzw. Connected Party Subaddress als Träger hierfür verwendet wird.

Bei vorhandenem OPC (Operation Code) Calling Party Name oder Connected Party Name im FAC-IE (Facility Information Element) werden im Kontext des LM-Managers 5 bzw. 6 die Funktionen zum Eintragen der Namensinformation in das Informationselement SUBADDRESS aufgerufen. Je nach OPC (Operation Code) wird daher eine der im folgenden beschriebenen Funktionen verwendet.

Zuerst soll das Eintragen eines FAC-IE (Facility Information Element) "Calling Party Name" in das Informationselement "Calling Party Subaddress" erläutert werden.

Diese Funktion wird über den Tabelleneintrag OPC (Operation Code) "Calling Party Name" aufgerufen. Es wird zuerst überprüft, ob es sich bei der Nachricht um eine Nachricht SETUP handelt, da bei jeder anderen Nachricht kein Informationselement Calling Party Subaddress eingetragen werden kann. Weiterhin wird die Schnittstellenfunktionalität sowie die Betriebsart des Systems abgefragt. Eine Übertragung der Namensinformation auf diese Weise wird nur bei Euro-ISDN-Leitungen 7 mit dem Protokoll DSS1 durchgeführt, hingegen in allen anderen Fällen wird die Verarbeitung abgebrochen.

Das FAC-IE wird auf dem Presentation Indicator (siehe Fig. 2) hin überprüft, um zu sehen, ob die Namensinformation angezeigt werden darf oder nicht bzw. ob sie überhaupt verfügbar ist. Falls der Eintrag des Presentation Indicator "Name not available" sein sollte, wird keine Übertragung der Namensinformation in dem Informationselement SUBADDRESS vorgenommen. Gleiches gilt, wenn der Eintrag "Presentation restricted" (Namensinformationsunterdrückung) vorliegt.

Das Informationselement SUBADDRESS kann nur als Träger der Namensinformation dienen, wenn das Informationselement Calling Party Subaddress noch nicht für eine echte Subadressierung benutzt wird. Aus diesem Grunde erfolgt eine Abfrage, ob das Informationselement Calling Party Subaddress bereits vorhanden bzw. belegt ist. In der Regel ist aber bei Sprachverbindungen dieses Informationselement noch nicht belegt.

Der Zeichensatz der Namensinformation wird nicht in dem Informationselement SUBADDRESS übertragen, es wird vielmehr die ISO-8859-1 vorausgesetzt.

Die Namensinformation wird in einen Buffer (nicht gezeigt) für die Eintragung in ein Informationselement Calling Party Subaddress) zwischengespeichert. Dabei werden bis zu maximal 19 Byte der Namensinformation übernommen. Es wurde bereits darauf hingewiesen, daß die maximale Länge der frei belegbaren Information in einem Informationselement SUBADDRESS 20 Byte beträgt. Da indessen die Namensinformation des OPC (Calling Party Name) im FAC-IE maximal 26 Byte lang sein kann, wird im Odd/Even Indicator (siehe Fig. 3) des Informationselements SUBADDRESS ein Bit gesetzt, falls der Name gekürzt wird. Als Codierung wird NSAP verwendet, wobei 0x09 als AFI eingetragen wird. Bei dieser Codierung hat der Odd/Even Indicator (o/e in Fig. 3) des Informationselements SUBADDRESS, welcher nur bei BCD-Codierung von Bedeutung ist, keine weitere Funktion. Schließlich wird über den Message Händler das Informationselement Calling Party Subaddress in die Nachricht eingefügt.

Zum Eintragen einer Namensinformation eines FAC-IE "Connected Party Name" in ein Informationselement "Connected Party Subaddress" ausgehend von dem empfangenden System 2 wird zuerst diese Funktion über den Tabelleneintrag des FAC-IE "Connected Party Name" aufgerufen. Es wird dabei zuerst überprüft, ob es sich bei der Nachricht um eine Nachricht Connect handelt, da bei jeder anderen Nachricht kein Informationselement Connected Party Subaddress eingetragen werden kann. Der weitere Ablauf verläuft analog zu der Erläuterung hinsichtlich der Eintragung des FAC-IE Calling Party Name in ein Informationselement Calling Party Subaddress.

Nunmehr soll das Auslesen des Informationselements Subaddress erläutert werden.

Nach Bearbeiten der FAC-IE einer Nachricht und der aktiven Leistungsmerkmale werden noch einzelne spezielle Nachrichtentypen vom LM-Manager 5 bzw. 6 betrachtet. Bei den Nachrichten SETUP und CONNECT wird dabei geprüft, ob das Informationselement SUBADDRESS Namensinformationen enthält, die dann in ein FAC-IE Calling Party Name bzw. Connected Party Name eingetragen werden können. Dementsprechend sind zwei Funktionen zur Analyse und Eintragung nötig.

Zuerst soll dabei das Auslesen des Informationselements Calling Party Subaddress und das Eintragen der dabei erhaltenen Information in ein FAC-IE Calling Party Name erläutert werden.

Bei dieser Funktion wird überprüft, ob in der Nachricht SETUP ein Informationselement Calling Party Subaddress vorhanden ist. Es kann sich dabei sowohl um eine echte Namensinformation des rufenden Teilnehmers von dem sendenden System 1 her handeln, wie auch um eine echte Subadressierung im eigentlichen Sinne.

Ist die Nachricht mit Type NSAP und der AFE mit 0x09 codiert, handelt es sich bei dem Informationselement SUBADDRESS tatsächlich um die Namensinformation des rufenden Teilnehmers von dem sendenden System 1 her. Falls dies nicht der Fall sein sollte, wird die in diesem Fall echte Subadressierung nicht verändert und der weitere Ablauf nicht ausgeführt.

Falls es sich um eine Namensinformation gehandelt hat, wird in einem Array für die Eintragung in das FAC-IE Calling Party Name diese Namensinformation zwischengespeichert. Der Presentation Indicator (s. Fig. 2) wird auf "Presentation allowed" (Anzeige freigegeben) gesetzt, da ja nur solche Namensinformation in dem Informationselement SUBADDRESS übertragen werden (s. oben). Der Zeichensatz wird automatisch auf ISO-8859-1 gesetzt, da dieser Zeichensatz allgemein für Namensinformation beispielsweise in A6-Systemen verwendet wird.

Über den Odd/Even Indicator (s. "o/e" in Fig. 3) wird erkannt, daß die Namensinformation für die Übertragung des in dem Informationselement SUBADDRESS gemäß dem DSS1-Protokoll gekürzt wurde, so daß in diesem Fall ein Punkt hinter der Namensinformation gesetzt wird und auch so angezeigt wird.

Mit dem MH wird nun das FAC-IE wird nun das FAC-IE Calling Party Name in die Nachricht eingetragen und das Informationselement Calling Party Subaddress wird aus der Nachricht entfernt.

Nunmehr soll das Auslesen des Informationselements Connected Party Subaddress und das Eintragen der daraus erhaltenen Information in das FAC-IE Connected Party Name des sendenden Systems 1 erläutert werden. Bei dieser Funktion wird überprüft, ob in der Nachricht CONNECT ein Informationselement Connected Party Subaddress vorhanden ist. Dabei kann es sich ebenfalls um eine echte Information des rufenden Teilnehmers, in diesem Fall des empfangenden Systems 2 handeln, wie auch um eine echte Subadressierung. Der weitere Ablauf verläuft indessen analog zu dem oben bezüglich des Auslesen des Informationselements Calling Party Subaddress Gesagten.

## Patentansprüche

1. Verfahren zur Übertragung von Information bezüglich der Namen von Teilnehmern, die einem sendenden System (1) bzw. einem empfangenden System (2) zugeordnet sind,
wobei die Übertragung von dem sendenden System (1) zu dem empfangenden System (2) gemäß dem Euro-ISDN (DSS1)-Protokoll über ein öffentliches Netz (3) erfolgt,
**dadurch gekennzeichnet,**
**daß** die Information bezüglich der Namen von Teilnehmern der Übertragung in einem Informationselement SUBADDRESS einer Nachricht des Euro-ISDN-Protokolls übertragen wird, wobei in das Informationselement SUBADDRESS weiterhin eine Kennung eingefügt wird, die anzeigt, daß in diesem Informationselement eine Teilnehmernamen-Information übertragen wird, und daß in den Fällen, in denen das Informationselement SUBADDRESS keine Kennung umfasst, der Inhalt dieses Informationselementes SUBADDRESS für eine Subadressierung benutzt wird.

2. Verfahren nach Anspruch 1,
**dadurch gekennzeichnet,**
**daß** die Einfügung der Information bezüglich der Namen von Teilnehmern der Übertragung in dem Informationselement SUBADDRESS des Euro-ISDN-Protokolls nur erfolgt, wenn eine Sprachübertragung ausgeführt wird.

3. Verfahren nach einem der vorhergehenden Ansprüche,
**dadurch gekennzeichnet,**
**daß** als Informationselement für die Übertragung der Teilnehmernahmen-Information die CALLING PARTY SUBADDRESS der ISDN-Nachricht SETUP im Fall des sendenden Systems (1) bzw. die CONNECTED PARTY SUBADDRESS der ISDN-Nachricht CONNECT im Fall des empfangenden Systems (2) verwendet wird.

4. Verfahren nach einem der vorhergehenden Ansprüche,
**dadurch gekennzeichnet,**
**daß** vor der Übertragung der Teilnehmernamen-Information anhand einer Tabelle (4) geprüft wird, ob dem entsprechenden Teilnehmer ein Namen zugeordnet ist.

5. Verfahren nach Anspruch 4,
**dadurch gekennzeichnet,**
**daß** für den Fall, daß einem Teilnehmer ein Namen zugeordnet ist, anhand der Tabelle (4) weiterhin geprüft wird, ob die Übertragung der Teilnehmernamen-Information gesperrt oder freigegeben ist.

6. Verfahren nach einem der vorhergehenden Ansprüche,
**dadurch gekennzeichnet,**
**daß** vor der Übertragung der Teilnehmernamen-Information geprüft wird, ob das entsprechende Informationselement SUBADDRESS frei oder schon belegt ist.

7. Verfahren nach einem der vorhergehenden Ansprüche,
**dadurch gekennzeichnet,**
**daß** für den Fall, daß die Teilnehmernamen-Information eine vorbestimmte Länge überschreitet, die Teilnehmernamen-Information entsprechend gekürzt wird und weiterhin eine Abkürzungsinformation in das Informationselement SUBADDRESS eingefügt und übertragen wird, wobei die Abkürzungsinformation anzeigt, daß die übertragene Teilnehmernamen-Information gekürzt wurde.

8. Telephonanlage nach dem Euro-ISDN (DSS1)-Protokoll, aufweisend ein sendendes System (1) und ein empfangendes System (2), die über ein öffentliches Netz (3) miteinander verbunden sind, wobei dem sendenden System (1) und dem empfangenden System (2) jeweils Namen von Teilnehmern zugeordnet werden können,
**dadurch gekennzeichnet,**
**daß** das sendende System (1) und das empfangende System (2) so ausgelegt sind, daß die Information bezüglich der Namen von Teilnehmern der Übertragung in einem Informationselement SUBADDRESS einer Nachricht des Euro-ISDN-Protokolls übertragbar ist, wobei in das Informationselement SUBADDRESS im Falle der Übertragung der Namen weiterhin eine Kennung eingefügt ist, die anzeigt, daß in diesem Informationselement eine Teilnehmernamen-Information übertragen wird, und in den Fällen, in denen in dem Informationselement eine Subadressierung übertragen wird, keine Kennung eingefügt ist.

9. Telephonanlage nach Anspruch 8,
**dadurch gekennzeichnet,**
**daß** die Einfügung der Information bezüglich der Namen von Teilnehmern der Übertragung in dem Informationselement SUBADDRESS des Euro-ISDN-Protokolls nur erfolgt, wenn das sendende System (1) bzw. das empfangende System (2) feststellt, daß eine Sprachübertragung gemäß dem Euro-ISDN-Protokoll ausgeführt werden soll.

10. Telephonanlage nach einem der Ansprüche 8 oder 9,
**dadurch gekennzeichnet,**
**daß** das Informationselement für die Übertragung der Teilnehmernahmen-Information die CALLING PARTY SUBADDRESS der ISDN-Nachricht SETUP im Falle des sendenden Systems (1) bzw. die CONNECTED PARTY SUBADDRESS der ISDN-Nachricht CONNECT im Falle des empfangenden Systems (2) ist.

11. Telephonanlage nach einem der Ansprüche 8 bis 10,
**dadurch gekennzeichnet,**
**daß** in dem sendenden System (1) bzw. dem empfangenden System (2) eine Tabelle (4) vorgesehen ist, anhand der vor der Übertragung der Teilnehmernamen-Information geprüft wird, ob dem entsprechenden Teilnehmer ein Namen zugeordnet ist.

12. Telephonanlage nach Anspruch 11,
**dadurch gekennzeichnet,**
**daß** für den Fall, daß einem Teilnehmer ein Namen zugeordnet ist, anhand der Tabelle (4) weiterhin geprüft wird, ob die Übertragung der Teilnehmernamen-Information freigegeben oder gesperrt ist.

13. Telephonanlage nach einem der Ansprüche 8 bis 12,
**dadurch gekennzeichnet,**
**daß** vor der Übertragung (3) der Teilnehmernamen-Information das sendende System (1) bzw. das empfangende System (2) prüft, ob das entsprechende Informationselement SUBADDRESS frei oder schon belegt ist.

14. Telephonanlage nach einem der Ansprüche 8 bis 12,
**dadurch gekennzeichnet,**
**daß** für den Fall, daß die Teilnehmernamen-Information eine vorbestimmte Länge überschreitet, die Teilnehmernamen-Information entsprechend gekürzt wird und weiterhin eine Abkürzungsinformation in das Informationselement SUBADDRESS eingefügt und übertragen wird, wobei die Abkürzungsinformation anzeigt, daß die übertragene Teilnehmernamen-Information gekürzt wurde.

## Claims

1. Method for the transmission of information relating to the names of subscribers which are allocated to a transmitting system (1) or a receiving system (2), whereby the transmission from the transmitting system (1) to the receiving system (2) is effected via a public network (3) according to the Euro-ISDN (DSS1) protocol,
**characterized in that**
the information relating to the names of subscribers participating in the transmission is transmitted in a SUBADDRESS information element of a message of the Euro-ISDN protocol, whereby an identifier is furthermore inserted into the SUBADDRESS information element, indicating that subscriber name information is being transmitted in this information element, and that, in cases where the SUBADDRESS information element comprises no identifier, the content of this SUBADDRESS information element is used for subaddressing.

2. Method according to Claim 1,
**characterized in that**
the information relating to the names of subscribers participating in the transmission is inserted into the SUBADDRESS information element of the Euro-ISDN protocol only if a voice transmission is carried out.

3. Method according to one of the preceding claims,
**characterised in that**
the CALLING PARTY SUBADDRESS of the ISDN SETUP message in the case of the transmitting system (1) or the CONNECTED PARTY SUBADDRESS of the ISDN CONNECT message in the case of the receiving system (2) is used as the information element for the transmission of the subscriber information.

4. Method according to one of the preceding claims,
**characterised in that**,
prior to the transmission of the subscriber name information, a check is carried out with reference to a table (4) to determine whether a name is allocated to the corresponding subscriber.

5. Method according to Claim 4,
**characterised in that**,
in the event that a name is allocated to a subscriber, a check is furthermore carried out with reference to the table (4) to determine whether the transmission of the subscriber name information is blocked or released.

6. Method according to one of the preceding claims,
**characterised in that**,
prior to the transmission of the subscriber name information, a check is carried out to determine whether the corresponding SUBADDRESS information element is free or already assigned.

7. Method according to one of the preceding claims,
**characterised in that**,
in the event that the subscriber information exceeds a predefined length, the subscriber name information is abbreviated accordingly and abbreviation information is furthermore inserted into the SUBADDRESS information element and is transmitted, whereby the abbreviation information indicates that the transmitted subscriber name information has been abbreviated.

8. Telephone system according to the Euro-ISDN (DSS1) protocol, having a transmitting system (1) and a receiving system (2), which are interconnected via a public network (3), whereby names of subscribers can be allocated in each case to the transmitting system (1) and the receiving system (2),
**characterised in that**
the transmitting system (1) and the receiving system (2) are designed in such a way that the information relating to the names of subscribers participating in the transmission can be transmitted in a SUBADDRESS information element of a message of the Euro-ISDN protocol, whereby, in the case of transmission of the names, an identifier is furthermore inserted into the SUBADDRESS information element, indicating that subscriber information is being transmitted in this SUBADDRESS information element and, in cases where a subaddressing is transmitted in the information element, no identifier is inserted.

9. Telephone system according to Claim 8,
**characterised in that**
the information relating to the names of subscribers participating in the transmission is inserted into the SUBADDRESS information element of the Euro-ISDN protocol only if the transmitting system (1) or the receiving system (2) establishes that a voice transmission according to the Euro-ISDN protocol is to be carried out.

10. Telephone system according to one of Claims 8 or 9,
**characterised in that**
the information element for the transmission of the subscriber information is the CALLING PARTY SUBADDRESS of the ISDN SETUP message in the case of the transmitting system (1), and the CONNECTED PARTY SUBADDRESS of the ISDN CONNECT message in the case of the receiving system (2).

11. Telephone system according to one of Claims 8 to 10,
**characterised in that**
a table (4) is provided in the transmitting system (1) or the receiving system (2), with reference to which a check is carried out prior to the transmission of the subscriber information to determine whether a name is allocated to the subscriber concerned.

12. Telephone system according to Claim 11,
**characterised in that**,
in the event that a name is allocated to a subscriber, a check is furthermore carried out with reference to the table (4) to determine whether the transmission of the subscriber name information is released or blocked.

13. Telephone system according to one of Claims 8 to 12,
**characterised in that**,
prior to the transmission (3) of the subscriber name information, the transmitting system (1) or the receiving system (2) checks whether the corresponding SUBADDRESS information element is free or already assigned.

14. Telephone system according to one of Claims 8 to 12,
**characterised in that**,
in the event that the subscriber name information exceeds a predefined length, the subscriber name information is abbreviated accordingly and abbreviation information is furthermore inserted into the SUBADDRESS information element and is transmitted, whereby the abbreviation information indicates that the transmitted subscriber name information has been abbreviated.

## Revendications

1. Procédé de transmission d'informations concernant les noms d'abonnés qui sont associés à un système émetteur (1) ou à un système récepteur (2),
la transmission du système émetteur (1) au système récepteur (2) s'effectuant selon le protocole Euro-RNIS (DSS1) par l'intermédiaire d'un réseau public (3),
**caractérisé par le fait que** l'information concernant les noms des abonnés de la transmission est transmise dans un élément d'information SUBADDRESS d'un message du protocole Euro-RNIS, un indicateur étant inséré en plus dans l'élément d'information SUBADDRESS pour indiquer qu'une information de nom d'abonné est transmise dans cet élément d'information et **par le fait que**, si l'élément d'information SUBADDRESS ne comprend pas d'indicateur, le contenu de cet élément d'information SUBADDRESS est utilisé pour un sous-adressage.

2. Procédé selon la revendication 1,
**caractérisé par le fait que** l'insertion de l'information concernant les noms d'abonnés de la transmission dans l'élément d'information SUBADDRESS du protocole Euro-RNIS ne s'effectue que si une transmission vocale est réalisée.

3. Procédé selon l'une des revendications précédentes,
**caractérisé par le fait que**, comme élément d'information pour la transmission de l'information de nom d'abonné, on utilise l'élément appelé CALLING PARTY SUBADDRESS du message RNIS SETUP dans le cas du système émetteur (1) ou l'élément CONNECTED PARTY SUBADDRESS du message RNIS CONNECT dans le cas du système récepteur (2) .

4. Procédé selon l'une des revendications précédentes,
**caractérisé par le fait que**, avant la transmission de l'information de nom d'abonné, on vérifie à l'aide d'un tableau (4) si un nom est associé à l'abonné correspondant.

5. Procédé selon la revendication 4,
**caractérisé par le fait que**, si un nom est associé à un abonné, on vérifie en plus à l'aide du tableau (4) si la transmission de l'information de nom d'abonné est bloquée ou autorisée.

6. Procédé selon l'une des revendications précédentes,
**caractérisé par le fait que**, avant la transmission de l'information de nom d'abonné, on vérifie si l'élément d'information SUBADDRESS correspondant est libre ou s'il est déjà occupé.

7. Procédé selon l'une des revendications précédentes,
**caractérisé par le fait que**, si l'information de nom d'abonné dépasse une longueur prédéterminée, l'information de nom d'abonné est raccourcie de manière appropriée et une information d'abréviation est insérée et transmise dans l'élément d'information SUBADDRESS, l'information d'abréviation indiquant alors que l'information de nom d'abonné transmise a été raccourcie.

8. Installation téléphonique selon le protocole Euro-RNIS (DSS1), comportant un système émetteur (1) et un système récepteur (2) qui sont reliés entre eux par l'intermédiaire d'un réseau public (3), des noms d'abonnés pouvant être associés à chaque fois au système émetteur (1) et au système récepteur (2),
**caractérisée par le fait que** le système émetteur (1) et le système récepteur (2) sont conçus de telle sorte que l'information concernant les noms d'abonnés de la transmission est transmise dans un élément d'information SUBADDRESS d'un message du protocole Euro-RNIS, un indicateur étant inséré en plus dans l'élément d'information SUBADDRESS dans le cas de la transmission du nom pour indiquer qu'une information de nom d'abonné est transmise dans cet élément d'information et de telle sorte que, si un sous-adressage est transmis dans l'élément d'information, aucun indicateur n'est inséré.

9. Installation téléphonique selon la revendication 8,
**caractérisée par le fait que** l'insertion de l'information concernant les noms d'abonnés de la transmission dans l'élément d'information SUBADDRESS du protocole Euro-RNIS ne s'effectue que si le système émetteur (1) ou le système récepteur (2) constate qu'une transmission vocale selon le protocole Euro-RNIS doit être réalisée.

10. Installation téléphonique selon l'une des revendications 8 ou 9,
**caractérisée par le fait que** l'élément d'information pour la transmission de l'information de nom d'abonné est l'élément appelé CALLING PARTY SUBADDRESS du message RNIS SETUP dans le cas du système émetteur (1) ou l'élément CONNECTED PARTY SUBADDRESS du message RNIS CONNECT dans le cas du système récepteur (2).

11. Installation téléphonique selon l'une des revendications 8 à 10,
**caractérisée par le fait qu'**il est prévu dans le système émetteur (1) ou dans le système récepteur (2) un tableau (4) à l'aide duquel, avant la transmission de l'information de nom d'abonné, on vérifie si un nom est associé à l'abonné correspondant.

12. Installation téléphonique selon la revendication 11,
**caractérisée par le fait que**, si un nom est associé à un abonné, on vérifie en plus à l'aide du tableau (4) si la transmission de l'information de nom d'abonné est bloquée ou autorisée.

13. Installation téléphonique selon l'une des revendications 8 à 12,
**caractérisée par le fait que**, avant la transmission (3) de l'information de nom d'abonné, le système émetteur (1) ou le système récepteur (2) vérifie si l'élément d'information SUBADDRESS correspondant est libre ou s'il est déjà occupé.

14. Installation téléphonique selon l'une des revendications 8 à 12,
**caractérisée par le fait que**, si l'information de nom d'abonné dépasse une longueur prédéterminée, l'information de nom d'abonné est raccourcie de manière appropriée et une information d'abréviation est insérée et transmise dans l'élément d'information SUBADDRESS, l'information d'abréviation indiquant alors que l'information de nom d'abonné transmise a été raccourcie.
